Europäisches Patentamt

European Patent Office

Office européen des brevets

(11) Publication number: **0 490 467 A2**

# EUROPEAN PATENT APPLICATION

(21) Application number: **91307592.5**

(22) Date of filing: **16.08.91**

(51) Int. Cl.5: **B32B 27/12**, B32B 7/08,
B32B 31/12, F41H 3/02

(30) Priority: **07.12.90 US 623780**

(43) Date of publication of application:
**17.06.92 Bulletin 92/25**

(84) Designated Contracting States:
**DE DK FR GB GR SE**

(71) Applicant: **BRUNSWICK CORPORATION**
**One Brunswick Plaza**
**Skokie Illinois 60077(US)**

(72) Inventor: **Parks, Dewey P.**
**931 Lexington Road**
**Deland, Florida 32720(US)**
Inventor: **Knox, Daniel H.**
**414 South Boundary Avenue**
**Deland, Florida 32720(US)**

(74) Representative: **Allden, Thomas Stanley et al**
**A.A. THORNTON & CO. Northumberland**
**House 303-306 High Holborn**
**London WC1V 7LE(GB)**

(54) **Ultra-lightweight camouflage.**

(57) A process is provided for fabricating a camouflage sheet and includes the steps of moving a carrier web over a roller by rotating the roller at a controlled speed. The roller has a soft outer surface. A film of polyvinyl/chloride is knifed onto the carrier web by a knife which is effective to indent the soft surface of the roller. The film is cured on the carrier web and is attached to a reinforcing layer, with the cured film and reinforcing layer being removed from the carrier web. The film and reinforcing layer are incised, stretched and sewn to a base support sheet in a stretched condition. The resulting camouflage sheet is ultra-lightweight in nature.

**Fig. 2**

Field of the Invention

This invention generally relates to the art of camouflage and, particularly, to an extremely lightweight camouflage sheet and a process for fabricating the same.

Background of the Invention

The standard U.S. Army camouflage of the late 1970's and 1980's entered production in about 1975 and was designated at lightweight radar scattering camouflage. This camouflage was made of synthetic materials in reversible two-sided screens in standard shapes and sizes. When contrasted with the previous burlap camouflage system that the synthetic lightweight camouflage system replaced, it was very successful because of its low moisture absorption, its resistance to rot, its radar scattering properties, and the logistic simplifications it introduced. This standard lightweight camouflage was produced to Military Specification 53004.

The specified standard camouflage had a maximum weight of 8 ounces per square yard. A camouflage sheet of the system is attached to a polyester net with metal rings, commonly called "hog rings", which together can add approximately one more ounce per square yard to the system. Consequently, in practice, the camouflage system (including the net, weighed about 8 ounces per square yard because the finished cloth typically was produced at less than the maximum allowable weight.

During the 15 years that this standard synthetic camouflage has been in the field, several shortcomings have developed which detract from its overall suitability. Broadly stated, these shortcomings can be characterized as follows:

The camouflage became too heavy to keep pace with highly mobile and, in most cases, air transported military hardware. Increased threats have driven U.S. forces to camouflage more and more expensive targets, some of which have become larger and taller. The camouflage must be physically carried and lifted by military personnel to the targets working in adverse conditions. These targets, such as helicopters, demand larger and lighter camouflage screen systems for practical deployment.

The prior materials and methods of construction are very prone to snagging. The standard camouflage will snag on itself, or targets that it is to cover, and on natural vegetation. This increases deployment time and labor, and can cause damage to the camouflage or the equipment being concealed.

The standard camouflage utilizes metallic rings to effect the cloth-to-net attachment which can damage optics, canopies and jet engine air inlets, for instance. This potential damage coupled with the heavy weight of the standard camouflage effectively limits it from being used to conceal aircraft and can cause serious operational problems for some important ground equipment applications.

The standard camouflage was not designed to counter the thermal infrared and certain millimeter wave radar threats which have increased substantially in the last 15 years.

To cure all of the above shortcomings in a single camouflage sheet system is a tall order and has proven to be quite a dilemma, particularly where obvious improvements to cure some of the shortcomings inevitably end up in increasing the weight of the camouflage. The present invention is directed to solving the above problems and providing an ultra-lightweight camouflage system not heretofore even contemplated.

Summary of the Invention

An object, therefore, of the invention is to provide a new and improved ultra-lightweight camouflage system.

Another object of the invention is to provide a new and improved process for fabricating a camouflage system of the character described.

The camouflage system of the invention is snag free, weighs approximately one-half that of present standard camouflage, provides centimeter and millimeter radar scattering up to 140 GHz, provides added concealment in the far infrared (thermal) regions (3 to 5 and 8 to 10 microns) as well as the visual (0.3 to 0.7 microns) and the near infrared (0.6 to 0.9 microns), and can be provided in large coverage up to any reasonable required area per single unit screen.

The ultra-lightweight camouflage system of the invention includes a flexible, laminated, multi-layered composite in which a closely woven or knitted base net or support sheet provides a non-snagging bottom surface. A laminated upper composite or garnish provides the radar suppression, visual, near and far infrared sensor defeating capabilities as well as the visual camouflage blending with natural environments.

The top laminated composite or garnish is sewn (stitched) to the bottom base net or support sheet in a configuration and manner to provide stability and strength to the overall system and, in particular, the bottom base net. The composite garnish is incised and fabricated to control the specific open area which helps control the emitting infrared radiation of the target under the camouflage sheet. This blending (scattering) affect will deny infrared sensors sufficient detail to identify the target covered by the camouflage sheet.

In particular, the base support net or sheet is formed of a closely woven or knitted material, specifically polyester threads in the preferred embodiment. The net is woven or knitted with approximately a 15 x 15 wave count and the threads are of approximately 220 denier.

The top garnish sheet is incised of a given incising pattern and is sewn to the closely woven or knitted base net in a particular overlapping stitching pattern, called an "onion" pattern. The garnish sheet has stretching properties greater than that of the base net, and the invention contemplates that the garnish sheet be sewn to the base net in a stretched condition. This not only "opens" the incised pattern of the garnish sheet but results in a quilted affect between the garnish sheet and the less stretchable base net.

The garnish sheet is of a composite structure which includes a polyvinyl/chloride film having radar and infrared suppressing fibers thereon, this composite being attached to a reinforcing layer of polyester material. The polyvinyl/ chloride film is only 0.002 inch thick. The radar and infrared suppressing fibers preferably are of a graphite material in finite lengths on the order of 0.050 inch and 0.200 inch. The reinforcing layer for the polyvinyl/chloride film is a spun bonded material, preferably of polyester.

The invention contemplates a novel process for fabricating a camouflage sheet as described above. The process includes the steps of providing a carrier web and moving the carrier web over a roller by rotating the roller at a controlled speed, preferably approximately 115 linear feet per minute. The roller has a soft surface. The polyvinyl/ chloride film of the top garnish sheet is knifed onto the carrier web by means of a knife which is effective to indent the soft surface of the roller. Pressure is applied between the roller and the knife on the order of .05-.10 pounds per linear inch. The roller is approximately 18 inches in diameter and the soft surface thereof has a durometer on the order of 75. The knife has a knife edge having approximately a one-eighth inch radius. This combination of speed, pressure and roller/knife construction is effective to form a polyvinyl/chloride film on the carrier web of the extreme 0.002 inch thinness.

The thin polyvinyl/chloride film is cured, but the above described radar and infrared suppressing fibers are blown onto the film before curing. The film and fibers then are attached to the spun bonded reinforcing layer between a pair of pressure rollers at 50-100 pounds per linear inch as the carrier web is stripped from the film. The resulting composite garnish sheet then is incised and sewn to the base net as described above.

Other objects, features and advantages of the invention will be apparent from the following detailed description taken in connection with the accompanying drawings.

## Brief Description of the Drawings

The features of this invention which are believed to be novel are set forth with particularity in the appended claims. The invention, together with its objects and the following description taken in conjunction with the accompanying drawings, in which like reference numerals identify like elements in the figures and in which:

FIGURE 1 is a schematic illustration of a section through the laminated camouflage system of the invention;

FIGURE 2 is a side elevational view schematically illustrating equipment used to fabricate the top garnish composite sheet;

FIGURE 3 is an illustration of the incising pattern of the top garnish composite sheet;

FIGURE 4 shows the sheet of Figure 3 in a stretched condition;

FIGURE 5 shows the bottom of the camouflage sheet with the stitching pattern for sewing the top garnished sheet onto the base net;

FIGURE 6 shows the top of the finished camouflage sheet system;

FIGURE 7 is a top plan view of a finished camouflage sheet, showing means for attaching one complete camouflage screen to another complete camouflage screen; and

FIGURE 8 is an enlarged view of the configuration of the attaching ropes between adjacent complete screens.

## Detailed Description of the Preferred Embodiment

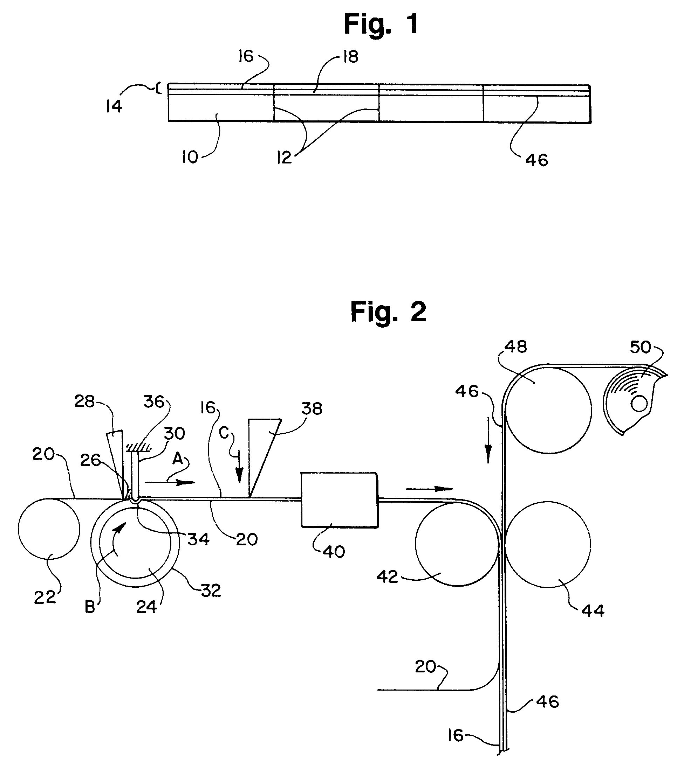

Referring to the drawings in greater detail, Figure 1 shows very schematically the basic laminations of the camouflage system of the invention. Quite generally, the system includes a base net or support sheet 10 to which is sewn, as at stitching lines 12, a composite garnish sheet 14 including a polyvinyl/chloride film 16 and a reinforcing layer 18. In contrast to the order of the description of the invention in the Summary of the Invention, above, the camouflage system will be described hereinafter by first describing the process of fabricating the system in order to understand the details of the individual components thereof.

Therefore, referring to Figure 2, a carrier web 20 is fed from a supply roll 22 to a roller 24 over which the carrier web is moved in the direction of arrow "A". The speed of movement of the carrier web is controlled, and preferably is on the order of 115 feet per minute, as determined by the speed of rotation of roller 24 in the direction of arrow "B".

Carrier web 20 is treated with a release agent and is provided for delustering the polyvinyl/chloride film (described hereinafter), and details of such means and process are shown in U.S. Patent No. 4,301,103 to Uphoff, dated November 17, 1981 and assigned to the assignee of this invention, and which is incorporated herein by reference.

Polyvinyl/chloride material 26, in a soft uncured state, is fed from a source 28 thereof to carrier web 20 behind a knife 30 for knifing film 16 (Fig. 1) onto carrier web 20. The nature of this point in the process is effective to form an extremely thin film on the order of 0.002 inch.

More particularly, roller 24 has a soft outer surface 32 of rubber material having a durometer on the order of 75. A generic type of such rubber is known as EPDM. The roller is on the order of eighteen inches in diameter. Knife 30 has a rounded knife edge 34 extending laterally across carrier web 20 and is mounted stationarily, as at 36, in a position that the knife edge indents the soft outer surface 32 of the roller. To this end, the knife edge is curved on approximately a 1/8 inch radius. The effect of the soft surfaced roller and the positioning of the rounded knife edge should be such as to provide a pressure of between .05-.10 pounds per linear inch between the knife edge and the soft surface of the roller. These parameters are effective to knife a very thin film of polyvinyl/chloride 16 onto carrier web 20.

The next step in the process is to add radar and infrared suppressing fibers to film 16 before it is cured. More particularly, a mixture of fibers from a source 38 thereof is blown onto film 16, as indicated by arrow "C". The fibers preferably are of graphite material and of varying lengths. In actual practice, fiber lengths of 0.200 inch and 0.050 inch have been mixed to effectively disperse a wide range of wave bands. The 0.200 inch fibers are effective in the C, X and Ku bands (i.e., up to 18 GHz) and the 0.050 inch fibers are effective in the Ka, W and D bands (i.e., 36, 94 and 140 GHz, respectively). These fibers add only 0.025 ounce per square yard for the 0.200 inch fibers and 0.015 ounce per square yard for the 0.050 inch fibers; that is in the total weight of the camouflage system.

The next step in the process is to cure the polyvinyl/chloride film 16, with the graphite fibers blown thereon, in an oven 40. This curing step can be carried out in an oven which is set at approximately 440°F, for approximately seven seconds.

Carrier web 20 and the composite of the cured polyvinyl/chloride film and graphite fibers, are fed through a pair of pinch or pressure rollers 42 and 44. At the same time, a reinforcing layer 46 of polyester material is fed by a guide roller 48 from a supply roll 50 of the polyester layer material. Pinch roller 42 may be fabricated of steel, and pinch roller 44 may be fabricated of hard rubber, whereby the reinforcing layer 46 of polyester material is physically bonded, under pressure of 50-100 pounds per linear inch, to the polyvinyl/chloride film. Reinforcing layer 46 is fabricated of spun bonded material.

After moving through pinch rollers 42 and 44, carrier web 20 is stripped from polyvinyl/chloride film 16, with reinforcing layer 46 physically adhering thereto.

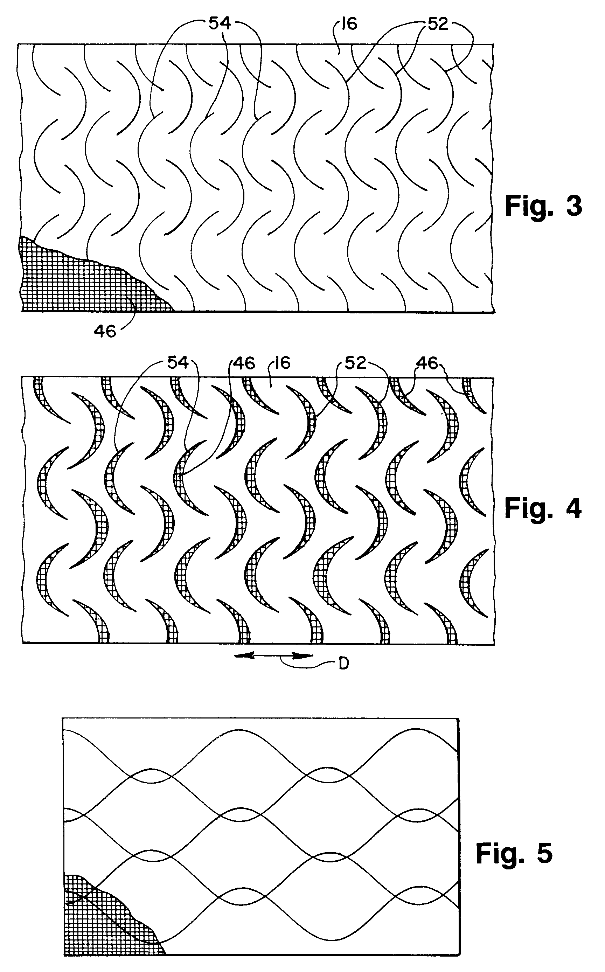

The next step in the process is shown in Figure 3. Specifically, the composite of polyvinyl/chloride film 16 and reinforcing layer 46 is incised in a given pattern such as by arc shaped slits 52 and 54. Arc shaped slits 52 and 54 run in linear arrays as shown in Figure 3, with the arcs of slits 52 being reverse in direction relative to the arcs of slits 54, and with the ends of the respective slits 52 and 54 being overlapped in spaced relationship.

Referring to Figure 4, the next step in the process is to take the composite of polyvinyl/chloride film 16 and reinforcing layer 46, after being incised as shown in Figure 3, and stretching the composite in the direction of double-headed arrow "D" (Fig. 4). This stretching operation causes portions of the composite to "waffle" in a three-dimensional fashion whereby portions of the composite between incising slits 52, 54 separate out of the otherwise planar configuration of the composite.

While the composite of polyvinyl/chloride film 16 and reinforcing layer 46 are in the stretched condition as described in relation to Figure 4, the composite then is attached to base net or support sheet 10. This attachment is shown in Figure 5. More particularly, the attachment is carried out by sewing the composite to the base support net. The sewing operation is carried out by a configuration wherein sew lines 56 and 58 run longitudinally of the web in a pattern whereby the sew lines overlap. In other words, as seen in Figure 5 (which shows the bottom of the sheet), sew lines 56 and 58 are in waved configurations, sort of like sine curves which are out of phase. This stitching configuration creates "onion" areas whereby, when the composite of polyvinyl/chloride film 16 and reinforcing layer 46 is released from its stretched condition, a quilting affect is created within the onion shaped areas surrounded by the overlapping stitch lines. The stitching is represented by numeral 12 in Figure 1.

Figure 5 shows the bottom of the camouflage sheet, with base net or support sheet 10 being visible. The base support sheet is fabricated of closely woven or knitted material, such as polyester material. In a preferred embodiment, the base support sheet is woven or knitted with approximately a 15 x 15 weave count using approximately 220 denier thread. This material adds on the order of 1.0 ounce per square yard of the overall camouflage sheet. The base support sheet preferably is of a neutral color, such as black or dark gray for a green woodland garnish, or a color to match the garnish color as with desert tan or arctic white. The base support sheet is coated with fire retardant, fungicides and water repellant as necessary to resist flame, fungus growth and water retention.

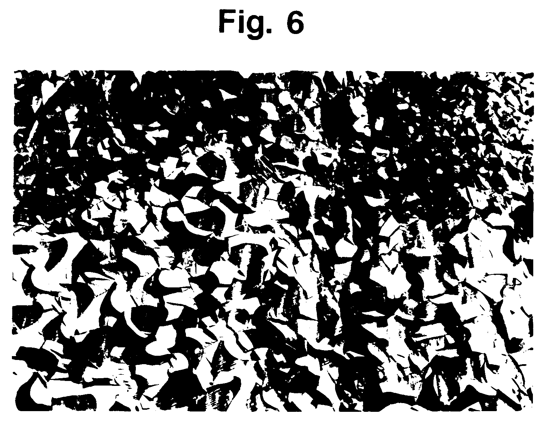

Figure 6 shows the top of the camouflage sheet, in relation to the bottom shown in Figure 5, and represents a finished product embodying the concepts of the invention.

A camouflage sheet system fabricated in accordance with the teachings of the invention, above, results in an ultra-lightweight product of less than 4.0 oz./square yard, or less than one-half that of the standard camouflage system available today. A breakdown of the composite item weights is as follows:

| Item | Weight, oz./yd$^2$ |
|---|---|
| Base Net (10) | 1.0 |
| Garnish | |
|   Polyvinyl/chloride film (16) | 2.0 |
|   Reinforcing layer (46) | 0.5 |
|   Sewing (56, 58) | 0.2 |
| | 3.7 |

Once strips of camouflage sheets are fabricated as described above, the strips can be used for making a large camouflage sheet system for covering targets such as helicopters and the like.

More particularly, the garnish is fabricated in continuous rolls as described above, approximately five feet wide. Base net 10 is provided in approximately 5-1/2 feet wide continuous rolls. The garnish is incised, stretched and sewn to the base net in continuous rolls 5-1/2 feet wide. Panels of camouflage screen then are cut from the rolls to any desired length. The edges of the panels are sewn together at seams to make any composite width desired and/or any length desired for a camouflage sheet system.

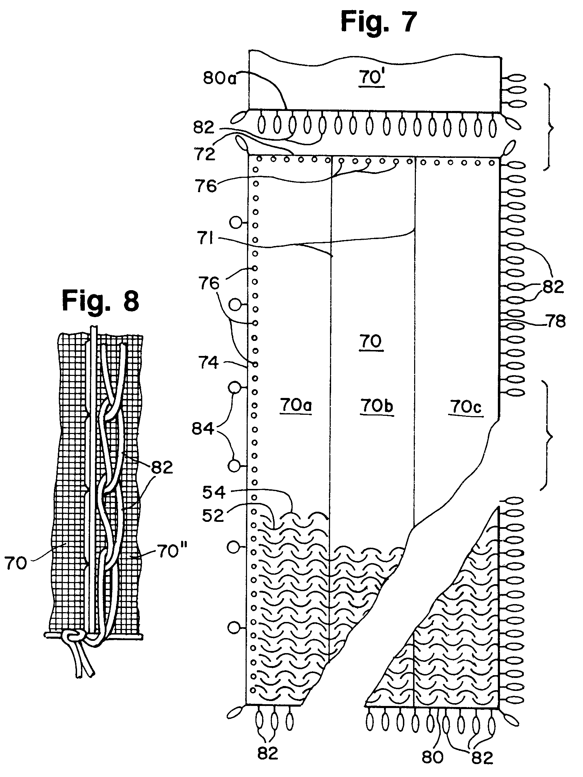

For example, camouflage screening for helicopters may be on the order of seventy feet wide and one hundred feet long. In order to facilitate fabrication of such a large screen, seven sheets or panels, five feet wide, can be sewn together to make a screen portion which is thirty five feet wide by one hundred feet long. Two of these screen portions can be attached by means which are shown in Figures 7 and 8 in order to achieve the seventy feet wide sheet which is one hundred or more feet long.

More particularly, referring to Figures 7 and 8, a composite camouflage screen 70 includes three five-feet wide strips or panels 70a-70c fabricated in accordance with the invention and sewn together along seam lines 71. Therefore, the camouflage screen system shown in Figure 7 is fifteen feet wide by approximately thirty five feet long. Only some of the incising slits 52 and 54 are shown to schematically illustrate the camouflage strips. To sides 72 and 74 of composite sheet 70 are provided with attaching holes 76, and two other sides 78 and 80 of the sheet are provided with attaching loops 82 of rope-like material. The loops are provided for passing through holes 76 along adjacent edges of adjacent composite sheets or screens, as described hereinafter. Suffice it to say, a portion of a second composite screen 70' is shown in Figure 7 with its one end 80a and loops 82 adjacent to end 72 of screen 70 and its attaching holes 76. Loops 82 of screen 70' will be passed through holes 76 of screen 70 to attach the composite screens in end-to-end relationship. Additional sheets would be similarly attached to assemble very large composite screens of the ultra-lightweight camouflage material. Composite screens as much as 10,000 square feet easily can be handled.

Before proceeding to Figure 8, Figure 7 also shows that the "outside" screens of a camouflage screen system can include rope-like stake loops 84 for staking the overall camouflage screen system to the ground, for instance.

Referring to Figure 8, camouflage screen 70 and an adjacent camouflage screen 70'' are schematically shown in order to illustrate how loops 82 are interconnected to attach adjacent screens together in an edge-wise fashion. For instance, loops 32 may be along edge 78 of screen 70 for insertion through the attachment holes in the adjacent screen 70''. The attachment holes are not shown in the schematic illustration of Figure 8. It can be seen that the loops are inserted through each other, in a seriatim manner, to form a chain of loops lengthwise of the adjoining edges of the screens. This chain continues along the entire length of a composite screen system until an end of the composite system is reached, whereby the end-most loop simply is tied-off in an appropriate manner.

Although composite screen 70 shown in Figure 7 is illustrated to be on the order of fifteen feet wide and forty feet long, composite screen systems can be fabricated in any practicable width or length desired. By sewing camouflage strips, fabricated according to the invention, together along seam lines (e.g., 71 in Figure 7). For instance, a composite screen can be fabricated thirty five feet wide and one hundred feet long by sewing together seven strips of camouflage material fabricated according to the invention. Two such composite screens can be attached side-by-side by the attachment means shown in Figures 7 and 8, to make a composite which is seventy feet wide and one hundred feet long, such as the helicopter camouflage screen described above. Of course, other sizes of composite screens can be fabricated. For instance, a general purpose camouflage screen is provided on the order of fifty feet wide and fifty feet long. Such a screen would be fabricated by sewing together ten five-foot wide strips, all of which are fifty feet long. Four such screens could be attached along their edges by the attachment means shown in Figures 7 and 8 to make a composite screen that is one hundred feet wide and one hundred feet long.

It will be understood that the invention may be embodied in other specific forms without departing from the spirit or central characteristics thereof. The present examples and embodiments, therefore, are to be considered in all respects as illustrative and not restrictive, and the invention is not to be limited to the details given herein.

## Claims

1. A process for fabricating a camouflage sheet, comprising the steps of:
   providing a carrier web;
   moving the carrier web over a roller by rotating the roller at a controlled speed, the roller having a soft surface;
   knifing a film of polyvinyl/chloride onto the carrier web by means of a knife which is effective to indent the soft surface of the roller;
   curing the film on the carrier web;
   removing the cured film from the carrier web; and
   applying the film to a base support sheet.

2. The process of claim 1 wherein said roller is rotated at a speed to move the carrier web approximately 115 linear feet per minute.

3. The process of claim 1 wherein a pressure is applied between the roller and the knife on the order of .05-.10 pounds per linear inch.

4. The process of claim 1 including the step of providing the soft surface of the roller with a durometer on the order of 75.

5. The process of claim 1 including the step of providing said knife with a knife edge having approximately a one-eighth inch radius.

6. The process of claim 1 including the step of adding radar and infrared suppressing fibers to the film before curing.

7. The process of claim 1 including the step of applying the cured film, removed from the carrier web, to a reinforcing layer.

8. The process of claim 1 wherein said film is stretched and is applied to the base support sheet in a stretched condition prior to releasing the stretched condition.

**9.** The process of claim 8 wherein said film is incised in a given pattern before stretching.

**10.** The process of claim 8 wherein said film is applied to the base support sheet by sewing in a given pattern.

**11.** A process for fabricating a camouflage sheet, comprising the steps of:
   providing a carrier web;
   moving the carrier web over a roller by rotating the roller at a controlled speed;
   knifing a film of polyvinyl/chloride onto the carrier web;
   adding radar and infrared suppressing fibers to the film;
   curing the film on the carrier web;
   applying the cured film to a reinforcing layer;
   removing the cured film from the carrier web; and
   applying the film to a base support sheet.

**12.** A process for fabricating a camouflage sheet, comprising the steps of:
   providing a carrier web;
   moving the carrier web over a roller by rotating the roller at a controlled speed;
   knifing a film of polyvinyl/chloride onto the carrier web;
   curing the film on the carrier web;
   removing the cured film from the carrier web;
   stretching the cured film; and
   applying the cured film to a base support sheet with the film in a stretched condition.

**13.** The process of claim 12 wherein said film is incised in a given pattern before stretching.

**14.** The process of claim 12 wherein said film is applied to the base support sheet by sewing in a given pattern.

**15.** A camouflage sheet, comprising:
   a closely woven, knitted and like base support sheet which provides a substantially nonsnagging surface; an incised ultra-lightweight top garnish sheet applied to the base support sheet and which provides radar, visual and infrared suppression properties; and
   the camouflage sheet having a weight on the order of 4.0 ounce per square yard.

**16.** The camouflage sheet of claim 15 wherein said top garnish sheet comprises a composite of a polyvinyl/chloride film laminated to a reinforcing layer.

**17.** The camouflage sheet of claim 16 wherein said polyvinyl/chloride film has a thickness and composition providing a weight of approximately 2.0 ounce per square yard.

**18.** The camouflage sheet of claim 16 wherein said reinforcing layer has a weight on the order of 0.5 ounce per square inch.

**19.** A camouflage sheet, comprising:
   a base support sheet of relatively low stretching properties;
   a garnish sheet of stretching properties greater than that of the base support sheet; and
   sewing means for securing the garnish sheet to the base support sheet,
   whereby the garnish sheet can be secured to the base support sheet in a stretched condition and released to provide a quilted affect in the camouflage sheet.

# Fig. 1

# Fig. 2

Fig. 3

Fig. 4

Fig. 5

Fig. 6

# Fig. 7

# Fig. 8